(19) **Europäisches Patentamt European Patent Office Office européen des brevets**

(11) **EP 4 726 987 A1**

(12) **EUROPEAN PATENT APPLICATION**

(43) Date of publication:
15.04.2026 Bulletin 2026/16

(21) Application number: 25150395.9

(22) Date of filing: 07.01.2025

(51) International Patent Classification (IPC):
H02M 1/12 (2006.01)  H02M 1/42 (2007.01)
H02M 7/23 (2006.01)  H02M 1/00 (2006.01)
H02M 1/36 (2007.01)

(52) Cooperative Patent Classification (CPC):
H02M 1/0043; H02M 1/12; H02M 1/4208;
H02M 7/23; H02M 1/36; H02M 7/4833

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 08.10.2024 CN 202411395166

(71) Applicant: **Lite-On Technology Corporation**
**Neihu, Taipei 114 (TW)**

(72) Inventor: **CHOU, Hsiao-Tse**
**114 Taipei (TW)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(54) **INTERLEAVED VIENNA RECTIFYING DEVICE AND CONTROLLING METHOD THEREOF**

(57) The application discloses an interleaved Vienna rectifier device and a control method thereof. Positive and negative sequence separation is performed on a positive-negative voltage sequence component and a positive-negative current sequence component, to separate a positive voltage sequence component from a negative voltage sequence component, and a positive current sequence component from a negative current sequence component. The positive voltage sequence component, the negative voltage sequence component, the positive current sequence component and the negative current sequence component are controlled separately. A Proportional-Integral (PI) controller and a Harmonic Elimination (PR) controller are used within a current inner loop to control the positive voltage sequence component, the negative voltage sequence component, the positive current sequence component and the negative current sequence component for generating a plurality of control signals to control the switches of the interleaved Vienna rectifier circuit.

FIG. 1

EP 4 726 987 A1

**Description**

TECHNICAL FIELD

The disclosure relates to an interleaved Vienna rectifying device and a controlling method thereof.

BACKGROUND

The Interleaved Vienna Rectifier is a power factor correction (PFC) topology commonly used to improve the efficiency and stability of power conversion. It is primarily applied in three-phase power systems to reduce harmonic distortion in input current and enhance the power factor.

Key features of the Interleaved Vienna Rectifier include: (1) Three-phase AC-DC conversion: The Vienna Rectifier is a three-phase AC-DC rectifier that efficiently converts three-phase AC to DC with an adjustable output voltage. (2) Modular design: The Interleaved Vienna Rectifier generally consists of multiple Vienna Rectifier modules operating in an interleaved manner (i.e., alternating with each other), reducing input current ripple and lowers current peaks. (3) High performance and low harmonic distortion: Through interleaving, this topology reduces harmonic components in input current, decreasing electromagnetic interference (EMI) and improving the power factor. (4) Simplified control strategy: Compared to other PFC topologies, the Vienna Rectifier's control strategy is relatively simple, requiring only single-phase voltage and current sensors.

Advantages of the Interleaved Vienna Rectifier include: (1) High efficiency: Duo to its modular and interleaved design, it can achieve high efficiency. (2) Low input current harmonics: It significantly reduces harmonic distortion in input current, which is essential for compliance with international standards such as IEC 61000-3-2. (3) Higher power density: The interleaving technique reduces the size of passive components, allowing for higher power density.

Currently, the Interleaved Vienna Rectifier is widely used in applications requiring high efficiency and low harmonic distortion, such as high-performance power supplies, renewable energy systems, electric vehicle chargers, and industrial power systems.

The Interleaved Vienna Rectifier has gained widespread attention and application due to its advantages in high performance, low harmonic distortion, and modular design.

With current technology, the Interleaved Vienna Rectifier can operate with a DC output voltage (Vbus) of 800V at full load for a 30kWAC/DC stage. Ideally, regardless of variations in load at the subsequent DC/DC stage, the AC/DC output voltage (Vbus) should stably operate at 800V, with the three-phase input current as a sine wave.

However, when there is a three-phase voltage imbalance and the three-phase input current is not sinusoidal, the traditional control approach for the Interleaved Vienna Rectifier may cause current distortion issues. Additionally, the DC output voltage of the AC/DC stage may contain a second-order ripple from the grid, which impacts input current quality and output voltage stability. Since real-world three-phase power grids are not perfectly balanced systems, the industry requires an optimized Interleaved Vienna Rectifier device and control method for unbalanced conditions.

SUMMARY

According to one embodiment, provided is a control method for an interleaved Vienna rectifier device having an interleaved Vienna rectifier circuit comprising a plurality of switches. The control method comprises: performing positive and negative sequence separation on a positive-negative voltage sequence component and a positive-negative current sequence component, to separate a positive voltage sequence component from a negative voltage sequence component, and a positive current sequence component from a negative current sequence component; controlling the positive voltage sequence component, the negative voltage sequence component, the positive current sequence component and the negative current sequence component respectively; and using a Proportional-Integral (PI) controller and a Harmonic Elimination (PR) controller within a current inner loop to control the positive voltage sequence component, the negative voltage sequence component, the positive current sequence component and the negative current sequence component for generating a plurality of control signals to control the switches of the interleaved Vienna rectifier circuit.

According to another embodiment, an interleaved Vienna rectifier device is provided. The interleaved Vienna rectifier device includes: an interleaved Vienna rectifier circuit comprising a plurality of switches; and a controller coupled to the interleaved Vienna rectifier circuit. The controller is configured for: performing positive and negative sequence separation on a positive-negative voltage sequence component and a positive-negative current sequence component, to separate a positive voltage sequence component from a negative voltage sequence component, and a positive current sequence component from a negative current sequence component; controlling the positive voltage sequence component, the negative voltage sequence component, the positive current sequence component and the negative current sequence component respectively; and using a Proportional-Integral (PI) controller and a Harmonic Elimination (PR) controller within a current inner loop to control the positive voltage sequence component, the negative voltage sequence component, the positive current sequence component and the negative current sequence component for generating a plurality of control signals to control the switches of the interleaved Vienna rectifier circuit.

BRIEF DESCRIPTION OF THE DRAWINGS

Figure 1 illustrates the circuit architecture of an Interleaved Vienna Rectifier device according to an embodiment of this disclosure.

Figure 2 shows a control method for the Interleaved Vienna Rectifier device in one embodiment.

Figures 3A and 3B illustrate the separation of the positive sequence and negative sequence according to an embodiment of the interleaved Vienna rectifier device.

Figure 4 shows a block diagram of the voltage loop according to an embodiment of the interleaved Vienna rectifier device.

Figure 5A illustrates the block diagram of the positive sequence control and harmonic elimination (PR) current controller according to an embodiment of the application, while Figure 5B shows the block diagram of the negative sequence control and harmonic elimination (PR) current controller according to an embodiment.

Figure 6 shows a diagram of the PR controller according to an embodiment of the application.

Figure 7 shows a flowchart for parameter updating of the PR controller according to an embodiment.

Figure 8 shows a synthesis of positive and negative sequence control results according to an embodiment of the application.

Figure 9 shows waveforms of three-phase voltage, three-phase current, and Vbus under balanced three-phase voltage in an embodiment of the application.

Figure 10 shows waveforms of three-phase voltage, three-phase current, and Vbus under unbalanced three-phase voltage in an embodiment of the application.

Figure 11 shows a comparison of the current total harmonic distortion (iTHD) between conventional technology and one embodiment under positive and negative sequence control.

Figure 12 compares control data for conventional technology (left) and one embodiment (right) under unbalanced three-phase voltage.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION

Technical terms of the disclosure are based on general definition in the technical field of the disclosure. If the disclosure describes or explains one or some terms, definition of the terms is based on the description or explanation of the disclosure. Each of the disclosed embodiments has one or more technical features. In possible implementation, one skilled person in the art would selectively implement part or all technical features of any embodiment of the disclosure or selectively combine part or all technical features of the embodiments of the disclosure.

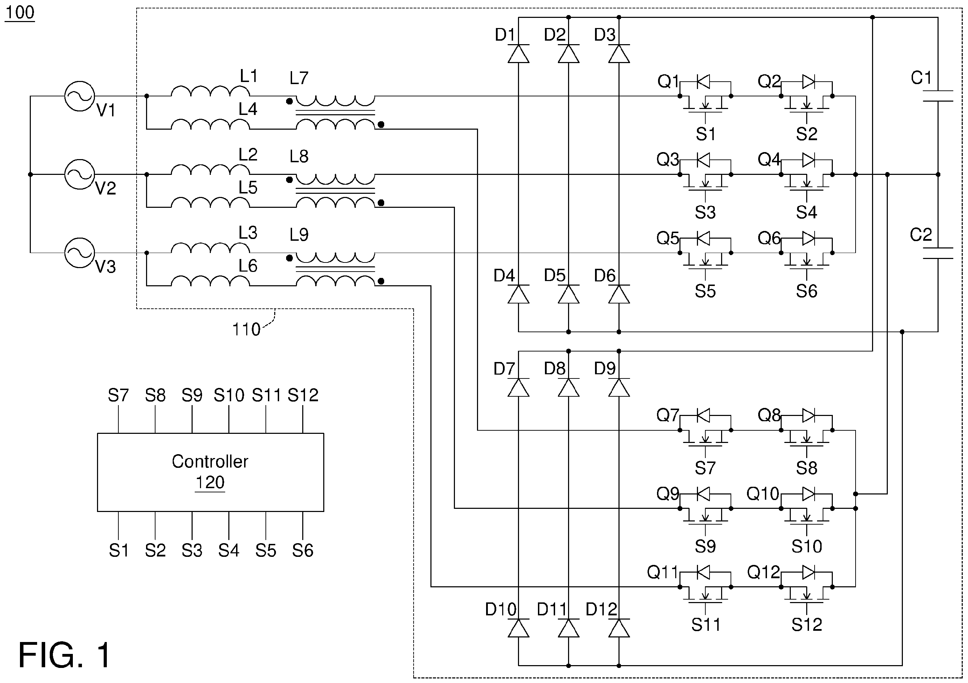

Figure 1 illustrates the circuit architecture of an Interleaved Vienna Rectifier device according to an embodiment of this disclosure. The Interleaved Vienna Rectifier device 100 includes an Interleaved Vienna rectifier circuit 110 and a controller 120. The device 100 receives AC input voltages V1-V3.

The Interleaved Vienna Rectifier circuit 110 is coupled to the controller 120 and includes multiple inductors L1-L9, diodes D1-D12, capacitors C1-C2, and switches Q1-Q12.

In one embodiment, the circuit architecture of the Interleaved Vienna Rectifier circuit 110 is essentially identical or similar to conventional Interleaved Vienna Rectifier circuits; therefore, its detailed architecture is omitted here.

The controller 120 outputs multiple control signals S1-S12 to control the switches Q1-Q12 in the Interleaved Vienna Rectifier circuit 110. In one possible example, the controller 120 may be implemented by a chip, a circuit block within a chip, firmware codes, or a circuit board containing several electronic components and wires. For example, though not limited to this, the controller 120 could be a microcontroller unit (MCU).

In a three-phase system, the grid voltage and current can be separated into positive, negative, and zero-sequence components. In one embodiment, the Interleaved Vienna Rectifier circuit 110 connects to an external three-phase grid using a three-phase three-wire configuration, which excludes zero-sequence components. Therefore, the focus here is on the positive and negative sequence components. When the three-phase voltage is balanced, the negative sequence component is zero, resulting in that the d-axis current $I_d$ and q-axis current $I_q$ only having positive sequence components. However, when there is a three-phase voltage imbalance, the negative sequence component is non-zero. With the control method of one embodiment, the three-phase input current can be balanced, achieving less distortion in the waveform, and the grid ripple present in the total DC capacitor voltage Vbus is eliminated. This helps maintain input current quality and output voltage stability.

One embodiment of the application discloses an Interleaved Vienna Rectifier device and a control method implementing positive and negative sequence current control in the d-q synchronous rotating coordinate, which separates the positive voltage/current sequence from the negative voltage/current sequence, and controls the positive voltage/-current sequence and the negative voltage/current sequence independently. Furthermore, for the inner current loop, a proportional-integral (PI) controller and a harmonic-elimination (PR) current controller are introduced. A frequency of the PR controller is set at 6 and 12 times the grid frequency to effectively control steady-state error for specific harmonics. By adding the PR controller to the current loop alongside the PI controller, effective harmonic elimination is achieved. Even under three-phase voltage imbalance, the input current can remain balanced, with the input current waveform remaining sinusoidal, resulting in low total harmonic distortion (THD) and significant reduction of secondary ripple in the DC output voltage (Vbus).

One embodiment of the application discloses the Interleaved Vienna Rectifier device and a control method for achieving positive and negative sequence control using the symmetrical component theory to separate the positive and negative sequence components of three-phase voltage and current. The positive and negative sequence components of voltage and current are independently controlled to synthesize the positive voltage sequence components and the negative voltage sequence components into actual voltage vectors and to synthesize the positive current sequence components and the negative current sequence components into actual current vectors. This approach allows for balanced three-phase currents and sinusoidal input current waveforms even under unbalanced conditions.

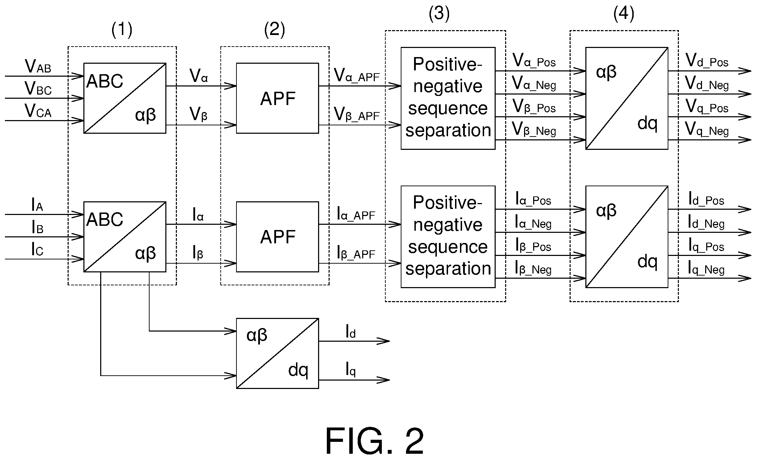

The control method for the Interleaved Vienna Rectifier device in one embodiment will now be explained. Figure 2 shows the steps: "Clarke Transformation," "Initial Phase Sequence Separation," "Positive and Negative Sequence Separation," and "Park Transformation" in the control method for the Interleaved Vienna Rectifier device in one embodiment.

In the first step (labeled (1) in Figure 2), the three-phase voltages $V_{AB}$, $V_{BC}$, $V_{CA}$, and the three-phase currents $I_A$, $I_B$, $I_C$ are measured. Through Clarke transformation (ABC-$\alpha\beta$), the time-domain components of three-phase voltages $V_{AB}$, $V_{BC}$, $V_{CA}$ are converted into two voltage components $V_\alpha$ and $V_\beta$ (also referred as stationary coordinate voltage components) in the stationary coordinate ($\alpha\beta$ coordinate). Similarly, the time-domain components of three-phase currents $I_A$, $I_B$, $I_C$ are transformed into two current components $I_\alpha$ and $I_\beta$ (also referred as stationary coordinate current components) in the stationary coordinate ($\alpha\beta$ coordinate), for decoupling the three-phase system into a two-phase system. The Clarke transformation transforms three-phase currents or voltages in a grid into two orthogonal two-dimensional signals, simplifying control algorithms and making control system design and analysis more convenient. In a three-phase system, the signals in the three phases (A, B, and C) are typically 120 degrees out of phase. Clarke transformation transforms these three-phase signals into two-dimensional orthogonal signals, usually labeled as $\alpha$ and $\beta$.

In the second step (labeled (2) in Figure 2), an all-pass filter (APF) is used in the stationary coordinate ($\alpha\beta$ coordinate) to change the phase of the input signal without altering the frequency of the input signal. The phase difference response can span a 90° frequency value, meaning a 90° phase shift between the input and output signals. This feature is used for initial phase sequence separation. In Figure 2, the input signal $V_\alpha$ and the output signal $V_{\alpha\_APF}$ of the all-pass filter have a 90° phase difference, and so on. Thus, the all-pass filter filters the stationary coordinate voltage (or current) components $V_\alpha$, $V_\beta$, $I_\alpha$, and $I_\beta$ into all-pass-filtered stationary coordinate voltage (or current) components $V_{\alpha\_APF}$, $V_{\beta\_APF}$, $I_{\alpha\_APF}$, and $I_{\beta\_APF}$.

In the third step (labeled (3) in Figure 2), positive and negative sequence components for both voltage and current are separated using the symmetrical component method. For example, Equations (1-1) and (1-2) demonstrate the symmetrical component method, taking voltage signals as an example, though it also applies to current signals.

$$V_{\alpha\beta}^{Pos} = 0.5 \begin{bmatrix} 1 & -q \\ q & 1 \end{bmatrix} V_{\alpha\beta} \qquad (1\text{-}1)$$

$$V_{\alpha\beta}^{Neg} = 0.5 \begin{bmatrix} 1 & q \\ -q & 1 \end{bmatrix} V_{\alpha\beta} \qquad (1\text{-}2)$$

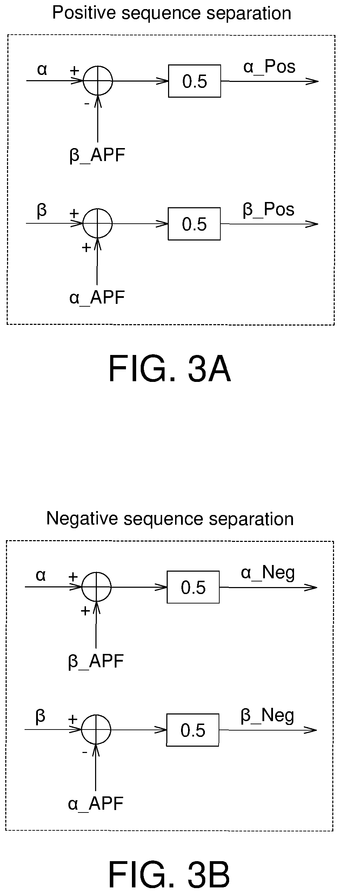

Figures 3A and 3B illustrate the separation of the positive sequence and negative sequence according to an embodiment of the interleaved Vienna rectifier device. In Figures 3A and 3B, "α" can represent $V_\alpha$ or $I_\alpha$; "β" can represent $V_\beta$ or $I_\beta$; "α_APF" can represent $V_{\alpha\_APF}$ or $I_{\alpha\_APF}$; "β_APF" can represent $V_{\beta\_APF}$ or $I_{\beta\_APF}$; "α_Pos" can represent $V_{\alpha\_Pos}$ or $I_{\alpha\_Pos}$; "β_Pos" can represent $V_{\beta\_Pos}$ or $I_{\beta\_Pos}$; "α_Neg" can represent $V_{\alpha\_Neg}$ or $I_{\alpha\_Neg}$; and "β_Neg" can represent $V_{\beta\_Neg}$ or $I_{\beta\_Neg}$.

In Figures 3A and 3B, the "all-pass-filtered stationary coordinate voltage (or current) components $V_{\alpha\_APF}$, $V_{\beta\_APF}$, $I_{\alpha\_APF}$, and $I_{\beta\_APF}$" are performed by separation of the positive sequence and negative sequence to obtain "(first) all-pass filtered stationary coordinate positive voltage sequence component $V_{\alpha\_Pos}$, (first) all-pass filtered stationary coordinate negative voltage sequence component $V_{\alpha\_Neg}$, (second) all-pass filtered stationary coordinate positive voltage sequence component $V_{\beta\_Pos}$, (second) all-pass filtered stationary coordinate negative voltage sequence component $V_{\beta\_Neg}$, (first) all-pass filtered stationary coordinate positive current sequence component $I_{\alpha\_Pos}$, (first) all-pass filtered stationary coordinate negative current sequence component $I_{\alpha\_Neg}$, (second) all-pass filtered stationary coordinate positive current sequence component $I_{\beta\_Pos}$, (second) all-pass filtered stationary coordinate negative current sequence component $I_{\beta\_Neg}$".

In the fourth step (labeled (4) in Figure 2), the Park transformation (αβ-dq) is applied to transform the αβ-axis components into dq-axis components in the synchronous rotating coordinate, for transformation of AC voltage and AC current into DC signals. Specifically, the Park transformation transforms the "(first) all-pass filtered stationary coordinate positive voltage sequence component $V_{\alpha\_Pos}$, (first) all-pass filtered stationary coordinate negative voltage sequence component $V_{\alpha\_Neg}$, (second) all-pass filtered stationary coordinate positive voltage sequence component $V_{\beta\_Pos}$, (second) all-pass filtered stationary coordinate negative voltage sequence component $V_{\beta\_Neg}$, (first) all-pass filtered stationary coordinate positive current sequence component $I_{\alpha\_Pos}$, (first) all-pass filtered stationary coordinate negative current sequence component $I_{\alpha\_Neg}$, (second) all-pass filtered stationary coordinate positive current sequence component $I_{\beta\_Pos}$, (second) all-pass filtered stationary coordinate negative current sequence component $I_{\beta\_Neg}$" into "(first) all-pass filtered synchronous rotating coordinate positive voltage sequence component $V_{d\_Pos}$, (first) all-pass filtered synchronous rotating coordinate negative voltage sequence component $V_{d\_Neg}$, (second) all-pass filtered synchronous rotating coordinate positive voltage sequence component $V_{q\_Pos}$, (second) all-pass filtered synchronous rotating coordinate negative voltage sequence component $V_{q\_Neg}$, (first) all-pass filtered synchronous rotating coordinate positive current sequence component $I_{d\_Pos}$, (first) all-pass filtered synchronous rotating coordinate negative current sequence component $I_{d\_Neg}$, (second) all-pass filtered synchronous rotating coordinate positive current sequence component $I_{q\_Pos}$, (second) all-pass filtered synchronous rotating coordinate negative current sequence component $I_{q\_Neg}$". Additionally, in Figure 2, the stationary coordinate current components $I_\alpha$ and $I_\beta$ are transformed using Park transformation to obtain the d-axis current $I_d$ and q-axis current $I_q$.

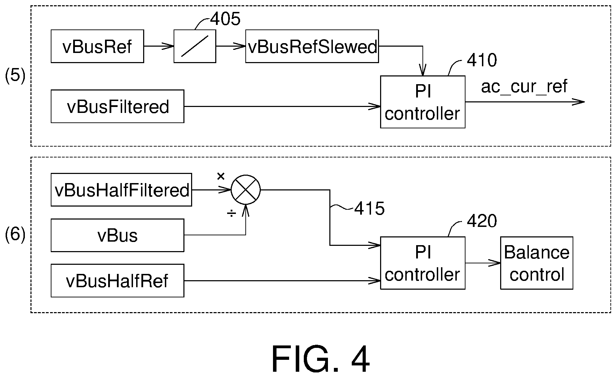

Figure 4 shows a block diagram of the voltage loop according to an embodiment of the interleaved Vienna rectifier device.

In the fifth step (labeled (5) in Figure 4), the total DC-side capacitor voltage vBus is detected, and after passing the total DC-side capacitor voltage vBus through a low-pass filter, the low-pass filtered DC-side capacitor voltage vBusFiltered is obtained. The PI controller 410 subtracts the reference DC-side voltage command vBusRef from the low-pass filtered DC-side capacitor voltage vBusFiltered and performs PI control. The controller output of the voltage PI controller 410 serves as the positive sequence d-axis command ac_cur_ref.

Additionally, the operation principle of the soft-start control unit 405 in Figure 4 is as follows. At startup, the single-phase AC input voltage is 230V, and before control begins, the voltage on capacitor C1 or C2 is approximately 230*√6 = 560V. When a switch is conducted to supply energy, if the DC-side voltage command vBusRef is set to 800V, the capacitor voltage of C1 or C2 needs to rise from 560V to 800V. If the capacitor voltage were to increase by 240V directly, the internal switches (e.g., Q1-Q12) could be failed or burned. Therefore, the soft-start control unit 405 gradually raises the DC-side voltage command vBusRef from 0V to 800V (referred to as vBusRefSlewed). Once stable, the total DC-side capacitor voltage vBus will be fixed at 800V. In one embodiment, soft-start control is applied to the DC-side voltage command vBusRef, gradually increasing the DC-side voltage command vBusRef from an initial value (e.g., but not limited to, 0V) to a target value (e.g., but not limited to, 800V).

In the sixth step (labeled (6) in Figure 4), the DC-side upper capacitor voltage vBusHalf is detected, and after passing the DC-side upper capacitor voltage vBusHalf through a low-pass filter, the filtered DC-side upper capacitor voltage vBusHalfFiltered is obtained. The filtered DC-side upper capacitor voltage vBusHalfFiltered is divided by the total DC-side capacitor voltage vBus to derive an upper-lower capacitor ratio (415). The PI controller 420 (also referred to as the PI bus balance controller) subtracts the DC-side upper capacitor voltage reference command vBusHalfRef from the upper-lower capacitor ratio (415) for performing PI bus balance control, to maintain the balance between the DC-side upper capacitor voltage and the DC-side lower capacitor voltage.

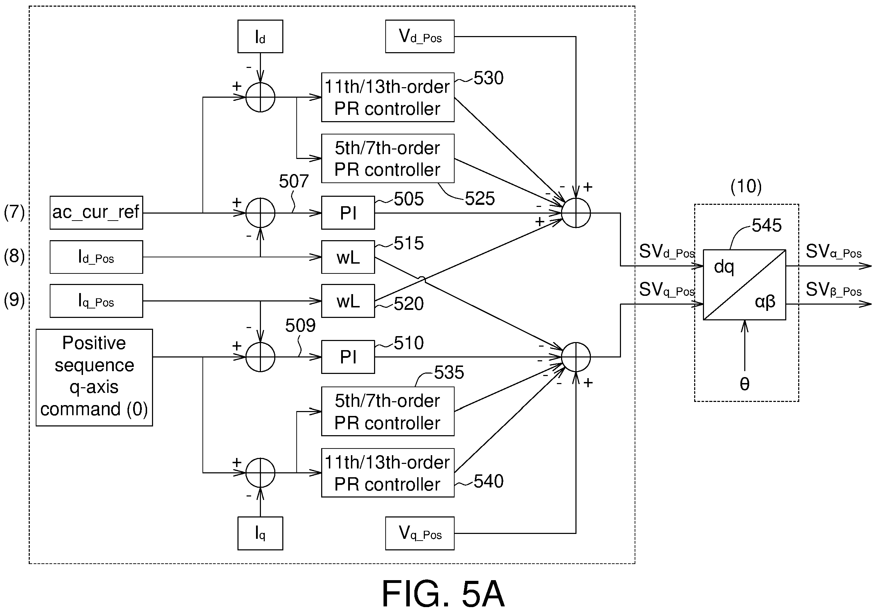

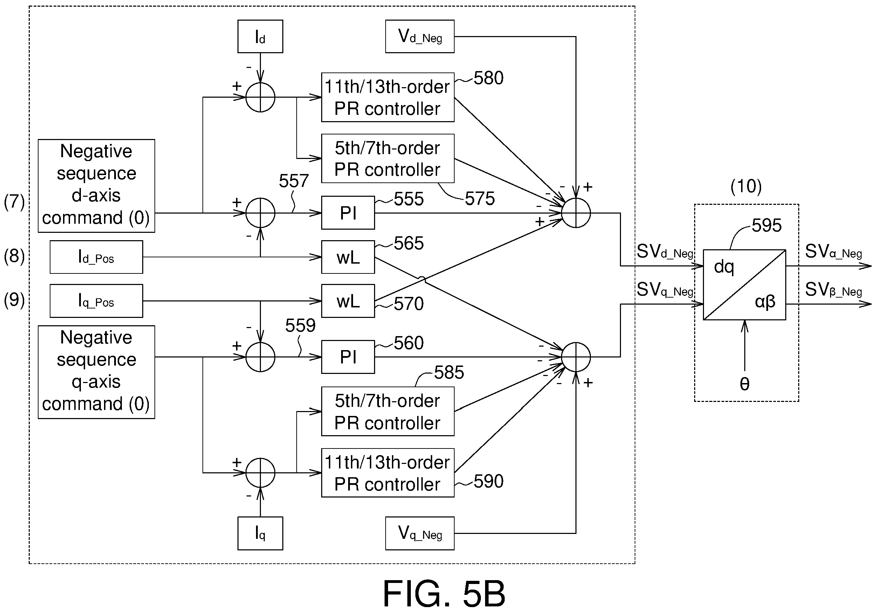

Figure 5A illustrates the block diagram of the positive sequence control and harmonic elimination (PR) current controller according to an embodiment of the application, while Figure 5B shows the block diagram of the negative sequence control and harmonic elimination (PR) current controller according to an embodiment.

In the seventh step (labeled (7) in Figure 5A and 5B), current inner loop control is carried out in the d-q synchronous rotating coordinate. The positive sequence d-axis command ac_cur_ref is subtracted from the first all-pass filtered synchronous rotating coordinate positive current sequence component $I_{d\_Pos}$ to yield a difference 507, which then enters the current PI controller 505. The positive sequence q-axis command (set to 0) is subtracted from the second all-pass filtered synchronous rotating coordinate current positive sequence component $I_{q\_Pos}$, yielding a difference 509, which then enters the current PI controller 510. Additionally, the first all-pass filtered synchronous rotating coordinate current positive sequence component $I_{d\_Pos}$ and the second all-pass filtered synchronous rotating coordinate current positive sequence component $I_{q\_Pos}$ enter into feedforward decoupling controllers 515 and 520, respectively, for feedforward decoupling control. The positive sequence d-axis command ac_cur_ref is subtracted from the d-axis current $I_d$, and the result enters the 5th/7th-order PR controller 525 and the 11th/13th-order PR controller 530. The positive sequence q-axis command is subtracted from the q-axis current $I_q$, and the result enters the 5th/7th-order PR controller 535 and the 11th/13th-order PR controller 540.

Similarly, current inner loop control is performed in the d-q synchronous rotating coordinate. The negative sequence d-axis command (set to 0) is subtracted from the first all-pass filtered synchronous rotating coordinate current negative sequence component $I_{d\_Neg}$, resulting in difference 557, which enters the current PI controller 555. The negative sequence q-axis command (set to 0) is subtracted from the second all-pass filtered synchronous rotating coordinate current negative sequence component $I_{q\_Neg}$, resulting in difference 559, which enters the current PI controller 560. Furthermore, the first all-pass filtered synchronous rotating coordinate current negative sequence component $I_{d\_Neg}$ and the second all-pass filtered synchronous rotating coordinate current negative sequence component $I_{q\_Neg}$ enter feedforward decoupling controllers 565 and 570, respectively, for feedforward decoupling control. The positive sequence d-axis command ac_cur_ref is subtracted from the d-axis current $I_d$, and the result enters the 5th/7th-order PR controller 575 and the 11th/13th-order PR controller 580. The negative sequence q-axis command is subtracted from the q-axis current $I_q$, and the result enters the 5th/7th-order PR controller 585 and the 11th/13th-order PR controller 590.

In the eighth step (labeled (8) in Figure 5A and 5B), the formulas for PI controllers 505, 510, 555, 560, and PR controllers 525, 530, 535, 540, 575, 580, 585, and 590 are as follows. For convenience, PI controllers 505, 510, 555, and 560 can collectively be referred to as PI controllers or current PI controllers, and PR controllers 525, 530, 535, 540, 575, 580, 585, and 590 can collectively be referred to as PR controllers.

$$G_i = K_p + \frac{K_i}{s} + (K_{p(pr)} + \frac{2K_r\omega_c s}{s^2 + 2\omega_c s + \omega_o^2}) \qquad (2)$$

$K_p$ and $K_i$ are proportional and integral coefficients, $K_r$ is the resonant coefficient, $\omega_c$ is the bandwidth, and $\omega_o$ is the resonant frequency. To eliminate the 5th, 7th, 11th, and 13th harmonics, the resonant frequency $\omega_o$ can be set to six or twelve times the grid frequency, respectively, and can be adjusted based on user-defined harmonic elimination requirements.

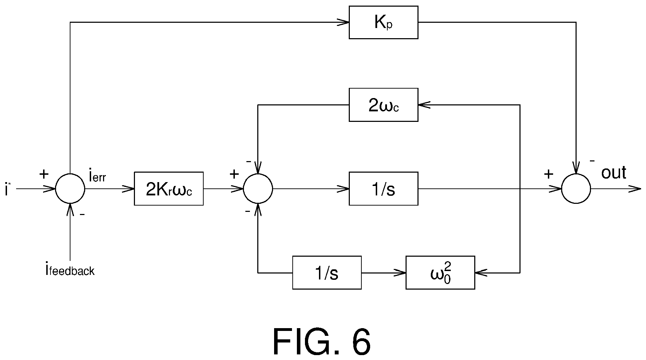

Figure 6 shows a diagram of the PR controller according to an embodiment of the application, which can be used to implement the formula in equation (2).

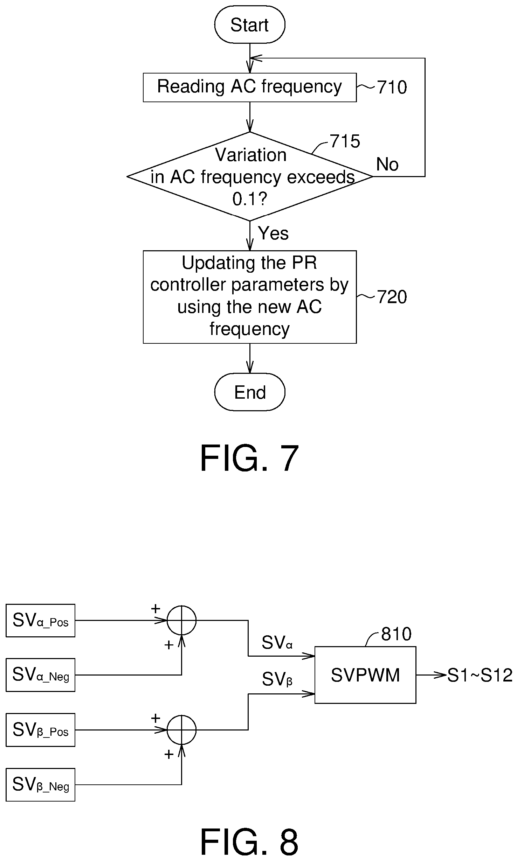

Figure 7 shows a flowchart for parameter updating of the PR controller according to an embodiment. In step 710, the AC frequency is read. In step 715, it is determined whether the variation in AC frequency exceeds 0.1. If yes, the process proceeds to step 720, where the PR controller parameters are updated with the new AC frequency. If no, the process returns to step 710.

In the ninth step (labeled (9) in Figure 5A and 5B), after harmonic elimination, the positive sequence d-axis modulated voltage expectation value $SV_{d\_Pos}$, the positive sequence q-axis modulated voltage expectation value $SV_{q\_Pos}$, the negative sequence d-axis modulated voltage expectation value $SV_{d\_Neg}$, and the negative sequence q-axis modulated voltage expectation value $SV_{q\_Neg}$ are as follows:

$$SV_{d\_Pos} = V_{d\_Pos} - \left(I_{d\_Pos}^* - I_{d\_Pos}\right)\left(K_p + \frac{K_i}{s}\right) - \left(I_{d\_Pos}^* - I_d\right)\left(K_{p(pr)} + \frac{2K_r\omega_c s}{s^2 + 2\omega_c s + \omega_o^2}\right)$$
$$+ \omega L I_{q\_Pos}$$

$$SV_{q\_Pos} = V_{q\_Pos} - \left(I^*_{q\_Pos} - I_{q\_Pos}\right)\left(K_p + \frac{K_i}{s}\right) - \left(I^*_{q\_Pos} - I_q\right)\left(K_{p(pr)} + \frac{2K_r\omega_c s}{s^2 + 2\omega_c s + \omega_o^2}\right)$$
$$- \omega L I_{d\_Pos}$$

$$SV_{d\_Neg} = V_{d\_Neg} - \left(I^*_{d\_Neg} - I_{d\_Neg}\right)\left(K_p + \frac{K_i}{s}\right) - \left(I^*_{d\_Pos} - I_d\right)\left(K_{p(pr)} + \frac{2K_r\omega_c s}{s^2 + 2\omega_c s + \omega_o^2}\right)$$
$$+ \omega L I_{q\_Neg}$$

$$SV_{q\_Neg} = V_{q\_Neg} - \left(I^*_{q\_Pos} - I_{q\_Pos}\right)\left(K_p + \frac{K_i}{s}\right) - \left(I^*_{q\_Pos} - I_q\right)\left(K_{p(pr)} + \frac{2K_r\omega_c s}{s^2 + 2\omega_c s + \omega_o^2}\right)$$
$$- \omega L I_{d\_Neg}$$

In the ninth step, the computation unit 531 calculates the positive sequence d-axis modulated voltage expectation value $SV_{d\_Pos}$ by processing the output of the current PI controller 505, the output of the feedforward decoupling controller 520, the output of the 5th/7th order PR controller 525, the output of the 11th/13th order PR controller 530, and the (first) all-pass filtered synchronous rotating coordinate voltage positive sequence component $V_{d\_Pos}$.

The computation unit 541 calculates the positive sequence q-axis modulated voltage expectation value $SV_{q\_Pos}$ by processing the output of the current PI controller 510, the output of the feedforward decoupling controller 515, the output of the 5th/7th order PR controller 535, the output of the 11th/13th order PR controller 540, and the (second) all-pass filtered synchronous rotating coordinate voltage positive sequence component $V_{q\_Pos}$.

The computation unit 581 calculates the negative sequence d-axis modulated voltage expectation value $SV_{d\_Neg}$ by processing the output of the current PI controller 555, the output of the feedforward decoupling controller 570, the output of the 5th/7th order PR controller 575, the output of the 11th/13th order PR controller 580, and the (first) all-pass filtered synchronous rotating coordinate voltage negative sequence component $V_{d\_Neg}$.

The computation unit 591 calculates the negative sequence q-axis modulated voltage expectation value $SV_{q\_Neg}$ by processing the output of the current PI controller 560, the output of the feedforward decoupling controller 565, the output of the 5th/7th order PR controller 585, the output of the 11th/13th order PR controller 590, and the (second) all-pass filtered synchronous rotating coordinate voltage negative sequence component $V_{q\_Neg}$.

In the tenth step (labeled (10) in Figure 5A and 5B), the positive sequence d-axis modulated voltage expectation value $SV_{d\_Pos}$, the positive sequence q-axis modulated voltage expectation value $SV_{q\_Pos}$, the negative sequence d-axis modulated voltage expectation value $SV_{d\_Neg}$, and the negative sequence q-axis modulated voltage expectation value $SV_{q\_Neg}$ undergo a Park inverse transformation and sequence component synthesis. Through space vector pulse width modulation (SVPWM), the control signals S1-S12 are generated, achieving control of the interleaved Vienna rectifier circuit 110.

Figure 8 shows a synthesis of positive and negative sequence control results according to an embodiment of the application. As shown in Figure 8, the output control signals $SV_{\alpha\_Pos}$ and $SV_{\beta\_Pos}$ of the stationary coordinate are added to obtain the output control signal $SV_\alpha$, and the output control signals $SV_{\alpha\_Neg}$ and $SV_{\beta\_Neg}$ are added to obtain the output control signal $SV_\beta$. These output control signals $SV_\alpha$ and $SV_\beta$ are input into the SVPWM unit 810 to produce the PWM control signals S1-S12, which control switches Q1-Q12 of the interleaved Vienna rectifier circuit 110.

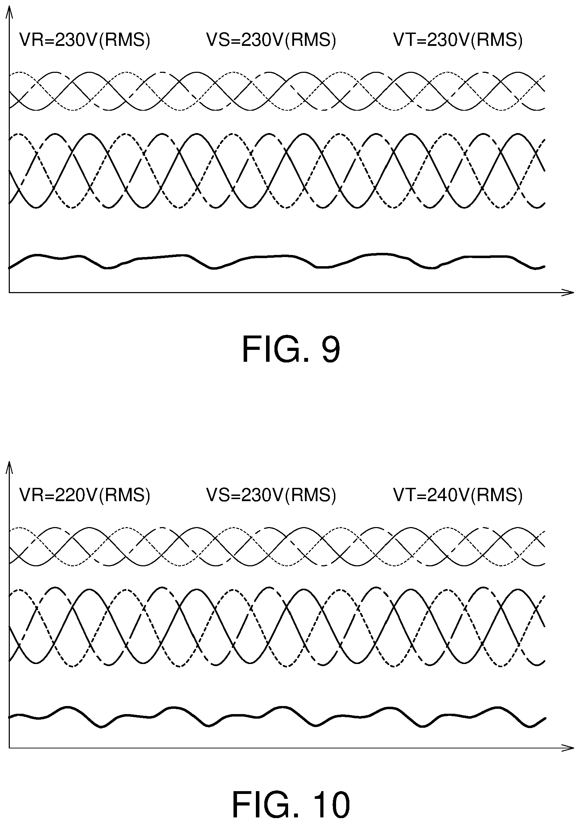

Figure 9 shows waveforms of three-phase voltage, three-phase current, and Vbus under balanced three-phase voltage in an embodiment of the application. As observed from Figure 9, the control method of the interleaved Vienna rectifier device in one embodiment does not affect control under balanced three-phase voltage.

Figure 10 shows waveforms of three-phase voltage, three-phase current, and Vbus under unbalanced three-phase voltage in an embodiment of the application. It can be seen in Figure 10 that this embodiment significantly improves issues of current imbalance and waveform distortion under unbalanced three-phase voltage. The ripple in Vbus is reduced from 49.25 V (peak-to-peak) with conventional technology to 7.317 V (peak-to-peak) after improvement.

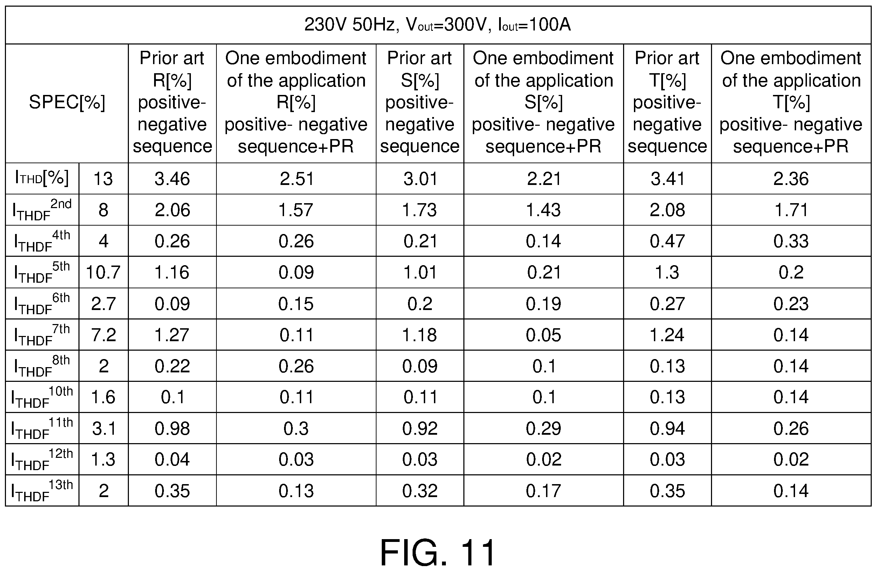

Figure 11 shows a comparison of the current total harmonic distortion (iTHD) between conventional technology and one embodiment under positive and negative sequence control. As seen in Figure 11, the PR controller in one embodiment effectively eliminates the 5th, 7th, 11th, and 13th harmonics. One embodiment of the application is applied to a three-phase system. In Figure 11, R%, S%, and T% represent the R-phase iTHD percentage, S-phase iTHD percentage and T-phase iTHD percentage, respectively. For example, for R%, the conventional technology shows iTHD values of 1.16, 1.27, 0.98, and 0.35 for the 5th, 7th, 11th, and 13th harmonics, respectively, while this embodiment reduces them to 0.09, 0.11, 0.3, and 0.13, showing a significant improvement.

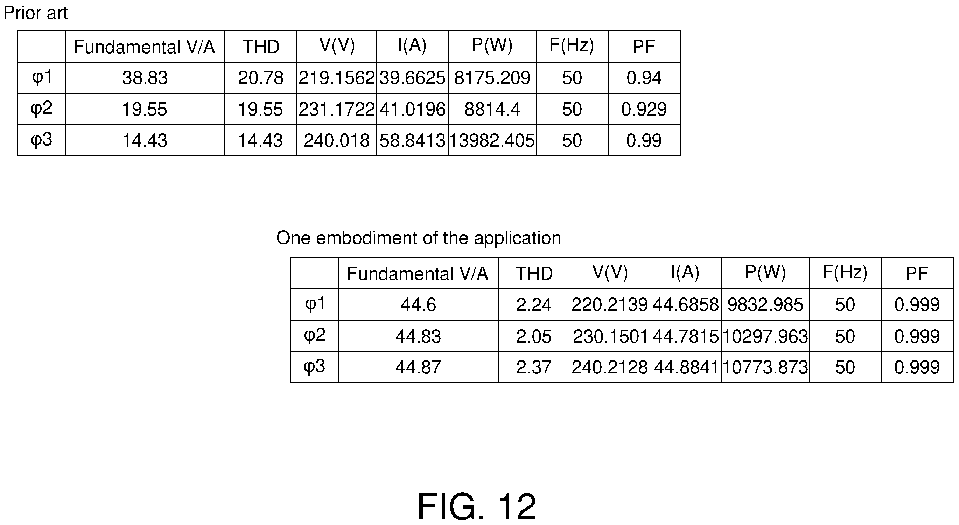

Figure 12 compares control data for conventional technology (left) and one embodiment (right) under unbalanced three-phase voltage. Figure 12 shows that this embodiment effectively improves iTHD under unbalanced three-phase voltage. For conventional technology, the three-phase voltage iTHD values are 20.78, 19.55, and 14.43, while this embodiment achieves iTHD values of 2.24, 2.05, and 2.37 for the three-phase voltage, showing a substantial improvement. For three-phase current, conventional technology shows values of 39.6625, 41.0196, and 58.8413, whereas this embodiment yields more balanced values of 44.6853, 44.7815, and 44.8841.

As previously stated, using conventional d-q control under unbalanced three-phase voltage results in imbalanced and distorted three-phase current. Negative sequence components cause second-order ripple in input power and DC voltage, affecting input current quality and output voltage stability.

In contrast, one embodiment of the application controls the negative sequence components to zero using the proposed positive and negative sequence control with PR controllers, ensuring that no issues of three-phase current imbalance or Vbus ripple occur unbalanced grid conditions. Furthermore, the proposed PI controller and harmonic elimination (PR) current controller in one embodiment effectively remove the 5th, 7th, 11th, and 13th harmonics, maintaining three-phase current quality and iTHD.

The solution provided in this application has been primarily described through the PI and PR controllers. It should be understood that to achieve these functions, the interleaved Vienna rectifier device and its control method include hardware structures and/or software modules to perform these functions. It will be readily apparent to those skilled in the art that the units and algorithm steps in this application can be implemented in hardware or a combination of hardware and computer software. Whether functions are executed by hardware or hardware driven by computer software depends on the specific application and design constraints of the technical solution. Various methods can be used to implement the functions described in each specific application without being considered outside the scope of this application.

In one embodiment of this application, the interleaved Vienna rectifier device can be divided into functional modules based on the aforementioned methods. For example, each function can be separated into a functional module, or two or more functions can be combined into a single processing module. These modules can be implemented as hardware or as software function modules. It is noted that dividing into modules in this application is merely an example and a logical function division. Other division methods may be used in practical implementation. The following description uses examples of dividing each function into separate functional modules.

Although many specific details have been described in the application, they should not be construed as limitations to the scope of the claimed invention, but rather as descriptions of the features of specific embodiments. Certain features described in the context of a single embodiment may also be implemented in combination in a single embodiment. Conversely, various features described in the context of a single embodiment may be implemented individually or in any suitable subcombination in multiple embodiments. Furthermore, although features may initially be described as operating in certain combinations or explained as such, in some cases, one or more features can be removed from that combination, and the described combination may be directed to a subcombination or variation of a subcombination. Likewise, although operations are depicted as occurring in a specific order in illustrations, this should not be understood as requiring that these operations be performed in the specific shown order or sequence, or that all illustrated operations must be performed to achieve the desired results.

While the above examples and implementations have been disclosed, modifications, adjustments, and enhancements to the disclosed examples and implementations, as well as other implementations, can be made based on the disclosed content.

In summary, while the invention has been disclosed with embodiments as described above, it is not intended to limit the invention. Persons skilled in the art, without departing from the scope of the invention, may make various changes and refinements. Therefore, the scope of protection of the invention shall be determined by the appended claims.

**Claims**

**1.** A control method for an interleaved Vienna rectifier device (100) having an interleaved Vienna rectifier circuit (110) comprising a plurality of switches (S1-S12), the control method comprising:

performing positive and negative sequence separation on a positive-negative voltage sequence component and a positive-negative current sequence component, to separate a positive voltage sequence component from a negative voltage sequence component, and a positive current sequence component from a negative current sequence component;
controlling the positive voltage sequence component, the negative voltage sequence component, the positive current sequence component and the negative current sequence component respectively; and
using a Proportional-Integral (PI) controller (410, 420) and a Harmonic Elimination (PR) controller (525, 535, 575, 585, 530, 540, 580, 590) within a current inner loop to control the positive voltage sequence component, the negative voltage sequence component, the positive current sequence component and the negative current sequence component for generating a plurality of control signals to control the switches of the interleaved Vienna rectifier circuit.

2. The control method for the interleaved Vienna rectifier device according to claim 1, wherein:

   a frequency of the PR controller is set to predetermined multiples of a power grid frequency; and
   detecting three-phase voltages and three-phase currents, wherein time-domain components of the three-phase voltages are transformed into a plurality of stationary coordinate voltage components through Clarke transformation, and time-domain components of the three-phase currents are transformed into a plurality of stationary coordinate current components.

3. The control method for the interleaved Vienna rectifier device according to claim 2, further comprising:

   using an all-pass filter to filter the stationary coordinate voltage components and the stationary coordinate current components to generate a plurality of all-pass filtered stationary coordinate voltage components and a plurality of all-pass filtered stationary coordinate current components.

4. The control method for the interleaved Vienna rectifier device according to claim 3, further comprising:
   performing positive and negative sequence separation on the all-pass filtered stationary coordinate voltage components and the all-pass filtered stationary coordinate current components to generate a plurality of all-pass filtered stationary coordinate positive voltage sequence components, a plurality of all-pass filtered stationary coordinate negative voltage sequence components, a plurality of all-pass filtered stationary coordinate positive current sequence components, and a plurality of all-pass filtered stationary coordinate negative current sequence components.

5. The control method for the interleaved Vienna rectifier device according to claim 4, further comprising:

   using Park transformation to transform the all-pass filtered stationary coordinate positive voltage sequence components, the all-pass filtered stationary coordinate negative voltage sequence components, the all-pass filtered stationary coordinate positive current sequence components, and the all-pass filtered stationary coordinate negative current sequence components into a plurality of all-pass filtered synchronous rotating coordinate positive voltage sequence components, a plurality of all-pass filtered synchronous rotating coordinate negative voltage sequence components, a plurality of all-pass filtered synchronous rotating coordinate positive current sequence components, and a plurality of all-pass filtered synchronous rotating coordinate negative current sequence components; and
   performing Park transformation on a plurality of stationary coordinate current components to generate a first-axis current and a second-axis current.

6. The control method for the interleaved Vienna rectifier device according to claim 5, further comprising:

   detecting a total DC side capacitor voltage;
   low-pass filtering the total DC side capacitor voltage to obtain a low-pass filtered total DC side capacitor voltage; and
   subtracting a DC side voltage reference command from the low-pass filtered total DC side capacitor voltage by the PI controller to perform PI control, wherein a controller output of the PI controller serves as a first positive sequence axis command.

7. The control method for the interleaved Vienna rectifier device according to claim 6, further comprising:
   performing soft start control on the DC side voltage reference command for gradually rising the DC side voltage reference command from an initial value to a target value.

8. The control method for the interleaved Vienna rectifier device according to claim 6, further comprising:

   detecting a DC side upper capacitor voltage;
   low-pass filtering the DC side upper capacitor voltage to obtain a low-pass filtered DC side upper capacitor voltage;
   dividing the low-pass filtered DC side upper capacitor voltage by the total DC side capacitor voltage to obtain an upper-to-lower capacitor ratio; and

subtracting the upper-to-lower capacitor ratio from a DC side upper capacitor voltage reference command to perform PI control to maintain balance between the DC side upper capacitor voltage and a DC side lower capacitor voltage.

9. The control method for the interleaved Vienna rectifier device according to claim 1, further comprising:

inputting a first positive sequence axis command, a second positive sequence axis command, the all-pass filtered synchronous rotating coordinate positive current sequence components, a first negative sequence axis command, the all-pass filtered synchronous rotating coordinate negative current sequence components, and a second negative-sequence axis command to the PI controller for PI control;

performing feedforward decoupling control on the all-pass filtered synchronous rotating coordinate positive current sequence components and the all-pass filtered synchronous rotating coordinate negative current sequence components; and

inputting the first positive sequence axis command, a first-axis current, the second positive sequence axis command, a second-axis current, and the second negative sequence axis command to the PR controller for PR control.

10. The control method for the interleaved Vienna rectifier device according to claim 9, wherein:

the PI controller and the PR controller relate to a proportional coefficient, an integral coefficient, a resonant coefficient, a bandwidth width, and a resonant frequency, wherein the resonant frequency is 6 or 12 times the grid frequency.

11. The control method for the interleaved Vienna rectifier device according to claim 10, further comprising:

generating a plurality of positive sequence modulation voltage expectation values based on an output result of the PI controller, output results of the feedforward decoupling controllers, an output result of the PR controller, and the all-pass filtered synchronous rotating coordinate positive voltage sequence components;

generating a plurality of negative sequence modulation voltage expectation values based on the output result of the PI controller, the output results of the feedforward decoupling controllers, the output results of the PR controller, and the all-pass filtered synchronous rotating coordinate negative voltage sequence components; and

performing Park inverse transformation, positive and negative sequence synthesis, and space vector pulse-width modulation (SVPWM) on the positive sequence modulation voltage expectation values and the negative sequence modulation voltage expectation values to obtain the control signals for controlling the switches of the interleaved Vienna rectifier circuit.

12. An interleaved Vienna rectifier device (100) including:

an interleaved Vienna rectifier circuit (110) comprising a plurality of switches (S1-S12); and

a controller (120) coupled to the interleaved Vienna rectifier circuit,

wherein the controller is configured for:

performing positive and negative sequence separation on a positive-negative voltage sequence component and a positive-negative current sequence component, to separate a positive voltage sequence component from a negative voltage sequence component, and a positive current sequence component from a negative current sequence component;

controlling the positive voltage sequence component, the negative voltage sequence component, the positive current sequence component and the negative current sequence component respectively; and

using a Proportional-Integral (PI) controller (410, 420) and a Harmonic Elimination (PR) controller (525, 535, 575, 585, 530, 540, 580, 590) within a current inner loop to control the positive voltage sequence component, the negative voltage sequence component, the positive current sequence component and the negative current sequence component for generating a plurality of control signals to control the switches of the interleaved Vienna rectifier circuit.

13. The interleaved Vienna rectifier device according to claim 12, wherein the controller is configured for:

setting a frequency of the PR controller to predetermined multiples of a power grid frequency; and

detecting three-phase voltages and three-phase currents, wherein time-domain components of the three-phase voltages are transformed into a plurality of stationary coordinate voltage components through Clarke transformation, and time-domain components of the three-phase currents are transformed into a plurality of stationary coordinate current components.

**14.** The interleaved Vienna rectifier device according to claim 13, wherein the controller is configured for:

using an all-pass filter to filter the stationary coordinate voltage components and the stationary coordinate current components to generate a plurality of all-pass filtered stationary coordinate voltage components and a plurality of all-pass filtered stationary coordinate current components.

**15.** The interleaved Vienna rectifier device according to claim 14, wherein the controller is configured for: performing positive and negative sequence separation on the all-pass filtered stationary coordinate voltage components and the all-pass filtered stationary coordinate current components to generate a plurality of all-pass filtered stationary coordinate positive voltage sequence components, a plurality of all-pass filtered stationary coordinate negative voltage sequence components, a plurality of all-pass filtered stationary coordinate positive current sequence components, and a plurality of all-pass filtered stationary coordinate negative current sequence components.

**16.** The interleaved Vienna rectifier device according to claim 15, wherein the controller is configured for:

using Park transformation to transform the all-pass filtered stationary coordinate positive voltage sequence components, the all-pass filtered stationary coordinate negative voltage sequence components, the all-pass filtered stationary coordinate positive current sequence components, and the all-pass filtered stationary coordinate negative current sequence components into a plurality of all-pass filtered synchronous rotating coordinate positive voltage sequence components, a plurality of all-pass filtered synchronous rotating coordinate negative voltage sequence components, a plurality of all-pass filtered synchronous rotating coordinate positive current sequence components, and a plurality of all-pass filtered synchronous rotating coordinate negative current sequence components; and performing Park transformation on a plurality of stationary coordinate current components to generate a first-axis current and a second-axis current.

**17.** The interleaved Vienna rectifier device according to claim 16, wherein the controller is configured for:

detecting a total DC side capacitor voltage;
low-pass filtering the total DC side capacitor voltage to obtain a low-pass filtered total DC side capacitor voltage; and
subtracting a DC side voltage reference command from the low-pass filtered total DC side capacitor voltage by the PI controller to perform PI control, where a controller output of the PI controller serves as a first positive sequence axis command.

**18.** The interleaved Vienna rectifier device according to claim 17, wherein the controller is configured for: performing soft start control on the DC side voltage reference command for gradually rising the DC side voltage reference command from an initial value to a target value.

**19.** The interleaved Vienna rectifier device according to claim 17, wherein the controller is configured for:

detecting a DC side upper capacitor voltage;
low-pass filtering the DC side upper capacitor voltage to obtain a low-pass filtered DC side upper capacitor voltage;
dividing the low-pass filtered DC side upper capacitor voltage by the total DC side capacitor voltage to obtain an upper-to-lower capacitor ratio; and
subtracting the upper-to-lower capacitor ratio from a DC side upper capacitor voltage reference command to perform PI control to maintain balance between the DC side upper capacitor voltage and a DC side lower capacitor voltage.

**20.** The interleaved Vienna rectifier device according to claim 12, wherein the controller is configured for:

inputting a first positive sequence axis command, a second positive sequence axis command, the all-pass filtered synchronous rotating coordinate positive current sequence components, a first negative sequence axis command, the all-pass filtered synchronous rotating coordinate negative current sequence components, and a second negative-sequence axis command to the PI controller for PI control;

performing feedforward decoupling control on the all-pass filtered synchronous rotating coordinate positive current sequence components and the all-pass filtered synchronous rotating coordinate negative current sequence components; and

inputting the first positive sequence axis command, a first-axis current, the second positive sequence axis command, a second-axis current, and the second negative sequence axis command to the PR controller for PR control.

21. The interleaved Vienna rectifier device according to claim 20, wherein the controller is configured for:
the PI controller and the PR controller relate to a proportional coefficient, an integral coefficient, a resonant coefficient, a bandwidth width, and a resonant frequency, wherein the resonant frequency is 6 or 12 times the grid frequency.

22. The interleaved Vienna rectifier device according to claim 21, wherein the controller is configured for:

generating a plurality of positive sequence modulation voltage expectation values based on an output result of the PI controller, output results of the feedforward decoupling controllers, an output result of the PR controller, and the all-pass filtered synchronous rotating coordinate positive voltage sequence components;

generating a plurality of negative sequence modulation voltage expectation values based on the output result of the PI controller, the output results of the feedforward decoupling controllers, the output results of the PR controller, and the all-pass filtered synchronous rotating coordinate negative voltage sequence components; and

performing Park inverse transformation, positive and negative sequence synthesis, and space vector pulse-width modulation (SVPWM) on the positive sequence modulation voltage expectation values and the negative sequence modulation voltage expectation values to obtain the control signals for controlling the switches of the interleaved Vienna rectifier circuit.

FIG. 1

FIG. 2

Positive sequence separation

FIG. 3A

Negative sequence separation

FIG. 3B

FIG. 4

FIG. 5A

FIG. 5B

(10)

595

dq / αβ

θ

$SV_{\alpha\_Neg}$

$SV_{\beta\_Neg}$

$SV_{d\_Neg}$

$SV_{q\_Neg}$

$V_{d\_Neg}$

580 — 11th/13th-order PR controller

575 — 5th/7th-order PR controller

555 — PI

565 — wL

570 — wL

560 — PI

585 — 5th/7th-order PR controller

590 — 11th/13th-order PR controller

$V_{q\_Neg}$

$I_d$

557

$I_q$

559

(7) Negative sequence d-axis command (0)

(8) $I_{d\_Pos}$

(9) $I_{q\_Pos}$

Negative sequence q-axis command (0)

18

FIG. 6

Start

Reading AC frequency ⟿710

Variation
in AC frequency exceeds
0.1? ⟋715

No

Yes

Updating the PR
controller parameters by
using the new AC
frequency ⟿720

End

# FIG. 7

SV$_{\alpha\_Pos}$

SV$_{\alpha\_Neg}$

$+$
$+$

SV$_\alpha$

810

SV$_\beta$

SVPWM

➤S1~S12

SV$_{\beta\_Pos}$

SV$_{\beta\_Neg}$

$+$
$+$

# FIG. 8

VR=230V(RMS)          VS=230V(RMS)          VT=230V(RMS)

## FIG. 9

VR=220V(RMS)          VS=230V(RMS)          VT=240V(RMS)

## FIG. 10

EP 4 726 987 A1

| 230V 50Hz, $V_{out}=300V$, $I_{out}=100A$ | | | | | | | |
|---|---|---|---|---|---|---|---|
| SPEC[%] | | Prior art R[%] positive- negative sequence | One embodiment of the application R[%] positive- negative sequence+PR | Prior art S[%] positive- negative sequence | One embodiment of the application S[%] positive- negative sequence+PR | Prior art T[%] positive- negative sequence | One embodiment of the application T[%] positive- negative sequence+PR |
| $I_{THD}[\%]$ | 13 | 3.46 | 2.51 | 3.01 | 2.21 | 3.41 | 2.36 |
| $I_{THDF}^{2nd}$ | 8 | 2.06 | 1.57 | 1.73 | 1.43 | 2.08 | 1.71 |
| $I_{THDF}^{4th}$ | 4 | 0.26 | 0.26 | 0.21 | 0.14 | 0.47 | 0.33 |
| $I_{THDF}^{5th}$ | 10.7 | 1.16 | 0.09 | 1.01 | 0.21 | 1.3 | 0.2 |
| $I_{THDF}^{6th}$ | 2.7 | 0.09 | 0.15 | 0.2 | 0.19 | 0.27 | 0.23 |
| $I_{THDF}^{7th}$ | 7.2 | 1.27 | 0.11 | 1.18 | 0.05 | 1.24 | 0.14 |
| $I_{THDF}^{8th}$ | 2 | 0.22 | 0.26 | 0.09 | 0.1 | 0.13 | 0.14 |
| $I_{THDF}^{10th}$ | 1.6 | 0.1 | 0.11 | 0.11 | 0.1 | 0.13 | 0.14 |
| $I_{THDF}^{11th}$ | 3.1 | 0.98 | 0.3 | 0.92 | 0.29 | 0.94 | 0.26 |
| $I_{THDF}^{12th}$ | 1.3 | 0.04 | 0.03 | 0.03 | 0.02 | 0.03 | 0.02 |
| $I_{THDF}^{13th}$ | 2 | 0.35 | 0.13 | 0.32 | 0.17 | 0.35 | 0.14 |

FIG. 11

Prior art

| Fundamental V/A | THD | V(V) | I(A) | P(W) | F(Hz) | PF |
|---|---|---|---|---|---|---|
| φ1 | 38.83 | 20.78 | 219.1562 | 39.6625 | 8175.209 | 50 | 0.94 |
| φ2 | 19.55 | 19.55 | 231.1722 | 41.0196 | 8814.4 | 50 | 0.929 |
| φ3 | 14.43 | 14.43 | 240.018 | 58.8413 | 13982.405 | 50 | 0.99 |

One embodiment of the application

| Fundamental V/A | THD | V(V) | I(A) | P(W) | F(Hz) | PF |
|---|---|---|---|---|---|---|
| φ1 | 44.6 | 2.24 | 220.2139 | 44.6858 | 9832.985 | 50 | 0.999 |
| φ2 | 44.83 | 2.05 | 230.1501 | 44.7815 | 10297.963 | 50 | 0.999 |
| φ3 | 44.87 | 2.37 | 240.2128 | 44.8841 | 10773.873 | 50 | 0.999 |

FIG. 12

Europäisches
Patentamt
European
Patent Office
Office européen
des brevets

## EUROPEAN SEARCH REPORT

**Application Number**

EP 25 15 0395

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 525 551 B (UNIV BEIFANG NATIONALITIES) 12 May 2023 (2023-05-12) * abstract * * description associated with figures 1-7; figures 1-7 * | 1-22 | INV. H02M1/12 H02M1/42 H02M7/23 H02M1/00 |
| A | CN 116 316 815 A (UNIV NANJING POSTS & TELECOMMUNICATIONS) 23 June 2023 (2023-06-23) * abstract * * description associated with figures 1-3; figures 1-3 * | 1-22 | ADD. H02M1/36 |
| A | US 2022/263428 A1 (KIM DAEJOONG [KR] ET AL) 18 August 2022 (2022-08-18) * abstract * * paragraph [0180] - paragraph [0212]; figure 8C * | 1-22 | |
| A | CN 110 504 849 A (LIANYUNGANG JARI ELECTRONICS CO LTD) 26 November 2019 (2019-11-26) * abstract * * description associatd with figure 1; figure 1 * | 1-22 | TECHNICAL FIELDS SEARCHED (IPC) H02M |

The present search report has been drawn up for all claims

| Place of search | Date of completion of the search | Examiner |
|---|---|---|
| The Hague | 20 June 2025 | Adami, Salah-Eddine |

EPO FORM 1503 03.82 (P04C01)

## ANNEX TO THE EUROPEAN SEARCH REPORT
## ON EUROPEAN PATENT APPLICATION NO.

EP 25 15 0395

This annex lists the patent family members relating to the patent documents cited in  the above-mentioned European search report.
The members are as contained in the European Patent Office EDP file on
The European Patent Office is in no way liable for these particulars which are merely given for the purpose of information.

20-06-2025

| Patent document cited in search report | | Publication date | Patent family member(s) | | Publication date |
|---|---|---|---|---|---|
| CN 111525551 | B | 12-05-2023 | NONE | | |
| CN 116316815 | A | 23-06-2023 | NONE | | |
| US 2022263428 | A1 | 18-08-2022 | KR | 20210006631 A | 19-01-2021 |
| | | | US | 2022263428 A1 | 18-08-2022 |
| | | | WO | 2021006601 A1 | 14-01-2021 |
| CN 110504849 | A | 26-11-2019 | NONE | | |

EPO FORM P0459

For more details about this annex : see Official Journal of the European Patent Office, No. 12/82